# EUROPEAN PATENT APPLICATION

(11) **EP 4 319 065 A1**
(43) Date of publication of application: **07.02.2024**
(21) Application number: 22787641.4
(22) Date of filing: 15.04.2022
(51) Int. Cl.: H04L 12/437, H04L 12/42

(54) **METHOD FOR ESTABLISHING NETWORK, ETHERNET SYSTEM, AND VEHICLE**

(30) Priority: 17.04.2021 CN 202110415169; 29.07.2021 CN 202110861508
(71) Applicant: Huawei Technologies Co., Ltd., Longgang Shenzhen, Guangdong 518129 (CN)
(72) Inventor: LI, Jie, Shenzhen, Guangdong 518129 (CN)
(74) Representative: Gill Jennings & Every LLP
(86) International application number: PCT/CN2022/087157
(87) International publication number: WO 2022/218419

(57) **Abstract**

This application provides a network establishing method, an Ethernet system, and a vehicle. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of another backbone node are in a forwarding state. The method includes: A first backbone node obtains link fault information of a ring network. The first backbone node switches a second backbone port of the first backbone node to a forwarding state based on the link fault information. According to the method in this application, response time for switching between an active link and a standby link can be shortened, fast network restructuring can be implemented, and a requirement of an in-vehicle application can be met.

## Description

This application claims priority to Chinese Patent Application No. 202110415169.3, filed on April 17, 2021 and entitled "NETWORK ESTABLISHING METHOD AND APPARATUS", which is incorporated herein by reference in its entirety.

This application claims priority to Chinese Patent Application No. 202110861508.0, filed on July 29, 2021 and entitled "NETWORK ESTABLISHING METHOD, ETHERNET SYSTEM, AND VEHICLE", which is incorporated herein by reference in its entirety.

### TECHNICAL FIELD

This application relates to the Ethernet field, and more specifically, to a network establishing method, an Ethernet system, and a vehicle.

### BACKGROUND

To improve communication security and reliability of a vehicle system, a redundant network is usually involved in an application process of an automotive Ethernet to perform data link backup. Typical network topologies include a T-network, a bilinear network, and a ring topology. In these network topologies, the ring network is widely used in many application scenarios due to the lowest costs.

The ring network inevitably generates a Layer 2 loop in a Layer 2 network. If no measure is taken to eliminate the loop, a series of problems such as a network broadcast storm and an unavailable media access control (media access control, MAC) address entry due to a MAC address table shock may be caused.

To eliminate the Layer 2 loop, in a conventional network technology, a spanning tree protocol (spanning tree protocol, STP), a rapid spanning tree protocol (rapid spanning tree protocol, RSTP), a multiple spanning tree protocol (multiple spanning tree protocol, MSTP), and the like are used to perform link pruning and loop elimination actions through node election. However, due to limitation of convergence algorithms and mechanisms of protocols such as STP, RSTP, and MSTP, network topology setup time cannot meet a requirement of an in-vehicle application.

### SUMMARY

This application provides a network establishing method, an Ethernet system, and a vehicle, to shorten response time for switching between an active link and a standby link, implement fast network restructuring, and meet a requirement of an in-vehicle application.

According to a first aspect, a network establishing method is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. The method includes: The first backbone node obtains link fault information of the ring network. The first backbone node switches the second backbone port of the first backbone node to a forwarding state based on the link fault information.

In this application, the first backbone node may learn link fault information of the ring network. The link fault information is used as an event trigger source. When the first backbone node obtains the information, the first backbone node switches a port in a blocked state to a forwarding state, to enable a standby link on which the port originally in the blocked state is located. After a port status is switched, the ring network can be restructured into a linear communication network for communication when a link is faulty. In the conventional technology, when a link is faulty, all nodes are silent, and then a new round of node election and link pruning are performed, to re-establish a communication connection between remaining links. Compared with that in the conventional technology, in this application, response time for switching between an active link and a standby link can be shortened, fast network restructuring can be implemented, and a requirement of an in-vehicle application can be met.

With reference to the first aspect, in some implementations of the first aspect, that the first backbone node obtains link fault information of the ring network includes: The first backbone node receives a notification packet through the first backbone port of the first backbone node. The notification packet is used to indicate that a first link is faulty. The first link is a link on which the first backbone port of the second backbone node is located.

With reference to the first aspect, in some implementations of the first aspect, the notification packet is a bridge protocol data unit BPDU packet.

With reference to the first aspect, in some implementations of the first aspect, that the first backbone node obtains link fault information of the ring network includes: The first backbone node determines that a second link is faulty. The second link is a link on which the first backbone port of the first backbone node is located.

With reference to the first aspect, in some implementations of the first aspect, the method further includes: The first backbone node switches the first backbone port of the first backbone node to a blocked state.

With reference to the first aspect, in some implementations of the first aspect, how the first backbone node determines that a second link is faulty includes: The first backbone node determines, through differential signal diagnosis, that the second link is faulty.

With reference to the first aspect, in some implementations of the first aspect, each of the M backbone nodes includes a first identifier. The first identifier is used to identify a backbone node in the network.

With reference to the first aspect, in some implementations of the first aspect, the method further includes: The first backbone node detects the first identifier. The first backbone node determines based on the first identifier that the first backbone node is a backbone node in the network.

According to a second aspect, a network establishing method is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node. The method includes: The second backbone node determines that a first link is faulty. The first link is a link on which a first backbone port of the second backbone node is located. The second backbone node sends a notification packet through a second backbone port of the second backbone node. The notification packet is used to indicate that the first link is faulty.

In this application, when determining that the first link is faulty, the second backbone node sends the notification packet, so that the first backbone node may learn link fault information of the ring network. The link fault information is used as an event trigger source. When the first backbone node obtains the information, the first backbone node switches a port in a blocked state to a forwarding state, to enable a standby link on which the port originally in the blocked state is located. After a port status is switched, the ring network can be restructured into a linear communication network for communication when a link is faulty. In the conventional technology, when a link is faulty, all nodes are silent, and then a new round of node election and link pruning are performed, to re-establish a communication connection between remaining links. Compared with that in the conventional technology, in this application, response time for switching between an active link and a standby link can be shortened, fast network restructuring can be implemented, and a requirement of an in-vehicle application can be met.

With reference to the second aspect, in some implementations of the second aspect, the method further includes: The second backbone node switches the first backbone port of the second backbone node to a blocked state.

With reference to the second aspect, in some implementations of the second aspect, the first backbone port of the second backbone node is a master port, and the second backbone port of the second backbone node is a slave port.

With reference to the second aspect, in some implementations of the second aspect, how the second backbone node determines that a first link is faulty includes: The second backbone node determines, through differential signal diagnosis, that the first link is faulty.

With reference to the second aspect, in some implementations of the second aspect, each of the M backbone nodes includes a first identifier. The first identifier is used to identify a backbone node in the network.

With reference to the second aspect, in some implementations of the second aspect, the method further includes: The second backbone node detects the first identifier. The second backbone node determines based on the first identifier that the second backbone node is a backbone node in the network.

With reference to the second aspect, in some implementations of the second aspect, the notification packet is a bridge protocol data unit BPDU packet.

According to a third aspect, a network establishing method is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. The network further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes. The method includes: The terminal node determines that a third link is faulty. The third link is a link on which the first terminal port is located. The terminal node switches the second terminal port to a forwarding state.

In this application, the terminal node may learn link fault information of an active link and a standby link of the terminal node. The link fault information is used as an event trigger source. When the terminal node obtains the information, the terminal node switches a port in a blocked state to a forwarding state, to enable a standby link on which the port originally in the blocked state is located. Compared with that in the conventional technology, in this application, a device other than the terminal node does not need to participate in control and processing, and fast switching between an active link and a standby link is completed under configuration logic inside the terminal node. Therefore, response time for switching between an active link and a standby link can be shortened, fast network restructuring can be implemented, and a requirement of an in-vehicle application can be met.

With reference to the third aspect, in some implementations of the third aspect, the method further includes: The terminal node switches the first terminal port to a blocked state.

With reference to the third aspect, in some implementations of the third aspect, how the terminal node determines that a third link is faulty includes: The terminal node determines, through differential signal diagnosis, that the third link is faulty.

With reference to the third aspect, in some implementations of the third aspect, the terminal node includes a second identifier. The second identifier is used to identify a terminal node in the network.

With reference to the third aspect, in some implementations of the third aspect, the method further includes: The terminal node detects the second identifier. The terminal node determines based on the second identifier that the terminal node is a terminal node in the network.

According to a fourth aspect, a network establishing apparatus is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node. The apparatus includes a transceiver unit and a processing unit. Optionally, the apparatus is the first backbone node. The transceiver unit is configured to obtain link fault information of the ring network. The processing unit is configured to switch the second backbone port of the first backbone node to a forwarding state based on link fault information.

With reference to the fourth aspect, in some implementations of the fourth aspect, the transceiver unit is specifically configured to receive a notification packet through the first backbone port of the first backbone node. The notification packet is used to indicate that a first link is faulty. The first link is a link on which the first backbone port of the second backbone node is located.

With reference to the fourth aspect, in some implementations of the fourth aspect, the notification packet is a bridge protocol data unit BPDU packet.

With reference to the fourth aspect, in some implementations of the fourth aspect, the processing unit is further configured to determine that a second link is faulty. The second link is a link on which the first backbone port of the first backbone node is located.

With reference to the fourth aspect, in some implementations of the fourth aspect, the processing unit is further configured to switch the first backbone port of the first backbone node to a blocked state.

With reference to the fourth aspect, in some implementations of the fourth aspect, the processing unit is specifically configured to determine, through differential signal diagnosis, that the second link is faulty.

With reference to the fourth aspect, in some implementations of the fourth aspect, each of the M backbone nodes includes a first identifier. The first identifier is used to identify a backbone node in the network.

With reference to the fourth aspect, in some implementations of the fourth aspect, the processing unit is further configured to: detect the first identifier; and determine, based on the first identifier, that the processing unit is a backbone node in the network.

According to a fifth aspect, a network establishing apparatus is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node. The apparatus includes a transceiver unit and a processing unit. Optionally, the apparatus is the second backbone node. The processing unit is configured to determine that a first link is faulty. The first link is a link on which a first backbone port of the second backbone node is located. The transceiver unit is configured to send a notification packet through a second backbone port of the second backbone node. The notification packet is used to indicate that the first link is faulty.

With reference to the fifth aspect, in some implementations of the fifth aspect, the processing unit is further configured to switch the first backbone port of the second backbone node to a blocked state.

With reference to the fifth aspect, in some implementations of the fifth aspect, the first backbone port of the second backbone node is a master port, and the second backbone port of the second backbone node is a slave port.

With reference to the fifth aspect, in some implementations of the fifth aspect, the processing unit is specifically configured to determine, through differential signal diagnosis, that the first link is faulty.

With reference to the fifth aspect, in some implementations of the fifth aspect, each of the M backbone nodes includes a first identifier. The first identifier is used to identify a backbone node in the network.

With reference to the fifth aspect, in some implementations of the fifth aspect, the processing unit is further configured to: detect the first identifier; and determine, based on the first identifier, that the processing unit is a backbone node in the network.

With reference to the fifth aspect, in some implementations of the fifth aspect, the notification packet is a bridge protocol data unit BPDU packet.

According to a sixth aspect, a network establishing apparatus is provided. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. The network further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes. The apparatus includes a processing unit. Optionally, the apparatus is the terminal node. The processing unit is configured to determine that a third link is faulty. The third link is a link on which the first terminal port is located. The processing unit is further configured to switch the second terminal port to a forwarding state.

With reference to the sixth aspect, in some implementations of the sixth aspect, the processing unit is further configured to switch the first terminal port to a blocked state.

With reference to the sixth aspect, in some implementations of the sixth aspect, the processing unit is specifically configured to determine, through differential signal diagnosis, that the third link is faulty.

With reference to the sixth aspect, in some implementations of the sixth aspect, the terminal node includes a second identifier. The second identifier is used to identify a terminal node in the network.

With reference to the sixth aspect, in some implementations of the sixth aspect, the processing unit is further configured to: detect the second identifier; and determine, based on the second identifier, that the processing unit is a terminal node in the network.

According to a seventh aspect, a network establishing apparatus is provided. The apparatus includes: a memory, configured to store a computer program; and a processor, configured to execute the computer program stored in the memory, so that the apparatus performs the method in any possible implementation of the first aspect, or performs the method in any possible implementation of the second aspect, or performs the method in any possible implementation of the third aspect.

According to an eighth aspect, a chip system is provided. The chip system includes: a processor, configured to invoke a computer program from a memory and run the computer program, so that a device in which the chip system is installed performs the method in any possible implementation of the first aspect, or performs the method in any possible implementation of the second aspect, or performs the method in any possible implementation of the third aspect.

According to a ninth aspect, a computer-readable storage medium is provided. The computer-readable storage medium stores a computer program, and when the computer program is run on a computer, the computer is enabled to perform the method in any possible implementation of the first aspect, or perform the method in any possible implementation of the second aspect, or perform the method in any possible implementation of the third aspect.

According to a tenth aspect, an Ethernet system is provided, including M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node.

The first backbone node is configured to obtain link fault information of the ring network, and switch the second backbone port of the first backbone node to a forwarding state based on the link fault information.

With reference to the tenth aspect, in some implementations of the tenth aspect, the second backbone node is configured to: determine that a first link is faulty, where the first link is a link on which a first backbone port of the second backbone node is located; and send a notification packet through a second backbone port of the second backbone node. The notification packet is used to indicate that the first link is faulty.

The first backbone node is specifically configured to receive the notification packet through the first backbone port of the first backbone node.

With reference to the tenth aspect, in some implementations of the tenth aspect, the second backbone node is further configured to switch the first backbone port of the second backbone node to a blocked state.

With reference to the tenth aspect, in some implementations of the tenth aspect, the first backbone port of the second backbone node is a master port, and the second backbone port of the second backbone node is a slave port.

With reference to the tenth aspect, in some implementations of the tenth aspect, the second backbone node is specifically configured to determine, through differential signal diagnosis, that the first link is faulty.

With reference to the tenth aspect, in some implementations of the tenth aspect, the notification packet is a bridge protocol data unit BPDU packet.

With reference to the tenth aspect, in some implementations of the tenth aspect, the first backbone node is specifically configured to determine that a second link is faulty. The second link is a link on which the first backbone port of the first backbone node is located.

With reference to the tenth aspect, in some implementations of the tenth aspect, the first backbone node is further configured to switch the first backbone port of the first backbone node to a blocked state.

With reference to the tenth aspect, in some implementations of the tenth aspect, the first backbone node is specifically configured to determine, through differential signal diagnosis, that the second link is faulty.

With reference to the tenth aspect, in some implementations of the tenth aspect, each of the M backbone nodes includes a first identifier. The first identifier is used to identify a backbone node in the Ethernet system.

With reference to the tenth aspect, in some implementations of the tenth aspect, the Ethernet system further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes. The terminal node is configured to: determine that a third link is faulty, where the third link is a link on which the first terminal port is located; and switch the second terminal port to a forwarding state.

With reference to the tenth aspect, in some implementations of the tenth aspect, the terminal node is further configured to switch the first terminal port to a blocked state.

With reference to the tenth aspect, in some implementations of the tenth aspect, the terminal node is specifically configured to determine, through differential signal diagnosis, that the third link is faulty.

With reference to the tenth aspect, in some implementations of the tenth aspect, the terminal node includes a second identifier. The second identifier is used to identify a terminal node in the Ethernet system.

According to an eleventh aspect, a vehicle is provided, including the Ethernet system according to any one of the tenth aspect or the possible implementations of the tenth aspect.

### BRIEF DESCRIPTION OF DRAWINGS

FIG. 1 is a schematic diagram of an application scenario according to an embodiment of this application;
FIG. 2 is a schematic block diagram of a network establishing method according to an embodiment of this application;
FIG. 3 is a schematic block diagram of an Ethernet system according to an embodiment of this application;
FIG. 4 is a schematic flowchart of a network establishing method according to an embodiment of this application;
FIG. 5 is a schematic block diagram of an Ethernet system according to an embodiment of this application;
FIG. 6 is a schematic diagram of a structure of a network establishing apparatus according to an embodiment of this application;
FIG. 7 is a schematic diagram of a structure of a network establishing apparatus according to an embodiment of this application;
FIG. 8 is a schematic diagram of a structure of a network establishing apparatus according to an embodiment of this application;
FIG. 9 is a schematic diagram of a structure of a network establishing apparatus according to an embodiment of this application;
FIG. 10 is a schematic diagram of running logic of a backbone node according to an embodiment of this application;
FIG. 11 is a schematic diagram of a network architecture 1100 according to an embodiment of this application;
FIG. 12 is a schematic diagram of port status switching when a link is faulty according to an embodiment of this application;
FIG. 13 is a schematic diagram of port status switching when a backbone node is faulty according to an embodiment of this application;
FIG. 14 is a schematic diagram of a transmission path of a BPDU packet when a link is faulty according to an embodiment of this application;
FIG. 15 is a schematic diagram of a transmission path of a BPDU packet on a backbone node according to an embodiment of this application; and
FIG. 16 is a schematic diagram of port status switching when a link is faulty according to an embodiment of this application.

### DESCRIPTION OF EMBODIMENTS

The following describes the technical solutions of this application with reference to the accompanying drawings.

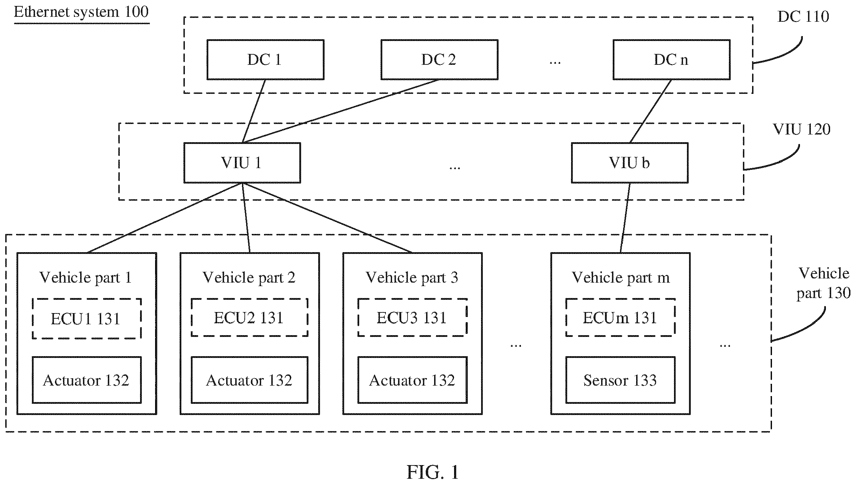

FIG. 1 is a schematic diagram of an application scenario according to an embodiment of this application. As shown in FIG. 1, the method provided in this embodiment of this application may be applied to an Ethernet system 100. The Ethernet system 100 may include a domain controller (domain controller, DC) 110, a vehicle integrated/integration unit (vehicle integrated/integration unit, VIU) 120, and a vehicle part 130. The DC 110, the VIU 120, and the vehicle part 130 communicate with each other by using an Ethernet (Ethernet) technology.

In FIG. 1, the DC 110 includes a plurality of DCs. Each DC is configured to manage a functional domain in a vehicle, that is, the DC is in communication connection with a plurality of vehicle parts located in the functional domain. The DC 110 is configured to control a vehicle part in a corresponding functional domain, or provide a data processing function for a vehicle part in a corresponding functional domain.

For example, a DC in a vehicle may include an autonomous driving domain controller, a cockpit domain controller (cockpit domain controller, CDC), a vehicle domain controller (vehicle domain controller, VDC), and the like. The autonomous driving domain controller may provide a service for a vehicle part that implements an autonomous driving function. The vehicle part that implements the autonomous driving function includes a monocular camera, a binocular camera, a millimeter-wave radar, a laser radar, an ultrasonic radar, and the like. The CDC may provide a service for a vehicle part in a cockpit domain. The vehicle part in the cockpit domain includes a head-up display, an instrument display, a radio, navigation, a camera, and the like. The VDC may provide a service for a vehicle part in a vehicle body domain and a vehicle part in a chassis domain. The vehicle part in the vehicle body domain includes a door/window lifting controller, an electric rearview mirror, an air conditioner, a central door lock, and the like. The vehicle part in the chassis domain includes a vehicle part in a braking system, a vehicle part in a steering system, and a vehicle part such as a throttle in an acceleration system.

The vehicle part 130 includes an execution element. The execution element is configured to implement a specific function, and the execution element may be, for example, a sensor 133 or an actuator 132 in a vehicle. Optionally, the vehicle part 130 may further include an electronic control unit (electronic control unit, ECU) 131. The vehicle part 130 may include one or more of the following vehicle parts: a vehicle part having some or all ECU functions, and a vehicle part having no electronic control function. The vehicle part 130 having all electronic control functions may be understood as that the vehicle part 130 may implement, by using the ECU 131 of the vehicle part 130, all electronic control functions required by the vehicle part 130. The vehicle part 130 having some electronic control functions may be understood as that some electronic control functions required by the vehicle part 130 are implemented by the ECU in the vehicle part 130, and the other electronic control functions required by the vehicle part 130 are implemented by the VIU 120. The vehicle part 130 having no electronic control function may be understood as that the vehicle part 130 does not have an electronic control unit ECU for implementing an electronic control function, and all electronic control functions required by the vehicle part 130 are implemented by the VIU. The ECU 131 is located inside the vehicle part, and is configured to provide an electronic control function for the vehicle part. For example, the ECU 131 is an electronic control unit in a rain wiper, an electronic control unit located in a vehicle door, and the like.

The VIU 120 is in communication connection with the vehicle part 130 and the DC 110 in the vehicle. For example, in FIG. 1, a VIU 1 is in communication connection with a vehicle part 1, a vehicle part 2, and a vehicle part 3, and the VIU 1 is in communication connection with a DC 1 and a DC 2. Optionally, the VIU 120 may be in communication connection with a DC in the DCs 110. For example, as shown in FIG. 1, a VIU b is in communication connection with a DC n. The VIU 120 may further be in communication connection with a plurality of DCs in the DCs 110. For example, as shown in FIG. 1, the VIU 1 may be in communication connection with the DC 1 and the DC 2.

For example, the VIU 120 may send control information obtained from the DC 110 to a corresponding component in the vehicle part 130, and control, based on the obtained control information, the component in the vehicle part 130 to perform an operation, for example, control an action of a rain wiper based on the control information, for another example, control an on/off state of a vehicle door lock based on the control information. The VIU 120 may also process to-be-processed data in the vehicle part 130, for example, perform data processing on rainfall information collected by using a sensitive element of the rain wiper, to determine a working status of the rain wiper. The working status includes a working frequency or an on/off state of the rain wiper. For another example, the VIU 120 may perform data processing on fingerprint information, on a vehicle door, obtained by using a sensitive element of a door lock, to determine on/off state information of the vehicle door. The VIU 120 may further send a data processing result to the DC 110, and the DC 110 generates corresponding control information based on a working status in an area.

Currently, in an in-vehicle Ethernet system, a ring network is widely used due to the lowest costs. For example, in the system 100, the VIUs may be connected in a wired manner to form a ring network. The ring network may also be referred to as a backbone network. Each VIU serves as a backbone node in the ring network. Further, electronic devices (for example, the DC 110 and the vehicle part 130 in FIG. 1) in the vehicle may be connected to the ring network, so that the electronic devices in the vehicle may implement communication through the ring network. A device that accesses the ring network may be referred to as a terminal node.

Using the ring network inevitably causes a Layer 2 loop to be formed in a Layer 2 network. Usually, to eliminate the Layer 2 loop, a spanning tree protocol (spanning tree protocol, STP), a rapid spanning tree protocol (rapid spanning tree protocol, RSTP), a multiple spanning tree protocol (multiple spanning tree protocol, MSTP), or the like may be used to perform link pruning and loop elimination through node election. However, due to limitation of convergence algorithms and mechanisms of protocols such as STP, RSTP, and MSTP, network topology setup time cannot meet a requirement of an in-vehicle application.

In view of this, this application provides a network establishing method, an Ethernet system, and a vehicle, to shorten response time for switching between an active link and a standby link, implement fast network restructuring, and meet a requirement of an in-vehicle application.

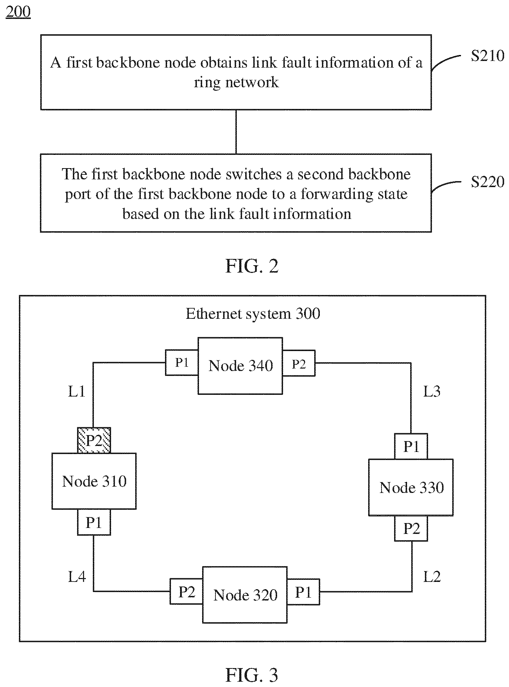

FIG. 2 is a schematic block diagram of a network establishing method 200 according to an embodiment of this application. A network includes M backbone nodes. Each of the M backbone nodes includes a first backbone port and a second backbone port. The M backbone nodes form a ring network by using the first backbone ports and the second backbone ports. The ring network may also be referred to as a backbone network. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node.

In this application, the network includes the M backbone nodes. Each of the M backbone nodes includes the first backbone port and the second backbone port. The M backbone nodes form the ring network by using the first backbone ports and the second backbone ports. M is an integer greater than 2. In the ring network, the second backbone port of the first backbone node may be set to a blocked state, and both the first backbone port and the second backbone port of the any backbone node other than the first backbone node in the M backbone nodes are in a forwarding state, to avoid a Layer 2 loop. In this case, a link on which a port in a blocked state is located may also be referred to as a standby link. Every two of these ports in a forwarding state are connected together to form an active link. The network establishing method 200 includes the following steps.

S210: The first backbone node obtains link fault information of the ring network.

In this application, a link fault includes but is not limited to the following possibilities: a link fault caused by a loosened backbone port of a backbone node, a link fault caused by a power failure of any connected backbone node on a link, or a link fault caused by a short circuit, an open circuit, or disconnection of a communication cable on a link.

It should be understood that, in this application, the backbone port is a port that is used to form a ring network and that is in ports of backbone nodes. One backbone node may include two backbone ports, and the two backbone ports each are connected to one backbone node.

In a possible implementation, the link fault information includes that a first link is faulty. The first link is a link on which a first backbone port of the second backbone node is located. In S210, that the first backbone node obtains the link fault information of the ring network includes:

The second backbone node determines that the first link is faulty. The second backbone node sends a notification packet through a second backbone port of the second backbone node. The notification packet is used to indicate that the first link is faulty. Correspondingly, the first backbone node may receive the notification packet through the first backbone port of the first backbone node.

In other words, when the second backbone node detects that the first link is faulty, the fault information may trigger the second backbone node to send the notification packet. The notification packet is used to indicate the link fault information. The second backbone node may send the notification packet through the second backbone port of the second backbone node. The notification packet may be forwarded by each backbone node in the ring network. The first backbone node receives the notification packet through the first backbone port of the first backbone node, to obtain the link fault information of the ring network based on the notification packet.

In this application, that the first link is faulty includes but is not limited to the following possibilities: a link fault caused by a loosened first backbone port of the second backbone node, a link fault caused by a power failure of one port of a connected backbone node on the first link, or a link fault caused by a short circuit, an open circuit, or a disconnection of a communication cable on the first link.

It should be noted that, when a link or a node in the ring network is faulty, link fault information can be detected on two connected backbone nodes on a faulty link or two backbone nodes connected to a faulty node. The fault information is used as a trigger source of the notification packet. Therefore, each of the two second backbone nodes forwards the notification packet through a port that is in the two second backbone nodes and that can perform normal communication. In other words, in the ring network, because there are two second backbone nodes that separately perform a step of sending a notification packet, there are two notification packets in the ring network. The notification packets are transmitted in opposite directions in the ring network. One notification packet arrives at the second backbone port of the first backbone node, but is discarded at the port because the port is in a blocked state. The other notification packet arrives at the first backbone port of the first backbone node. Because the first backbone port of the first backbone node is in a forwarding state, the first backbone node may receive the notification packet through the port. When receiving the notification packet, the first backbone node learns that a link is faulty in the ring network. In other words, the first backbone node obtains the link fault information based on the notification packet.

It should be understood that the notification packet in this application is a notification packet when a link is faulty. The link fault triggers the notification packet to be sent. When no link is faulty, sending of the notification packet is not triggered. Therefore, when the first backbone node receives the notification packet, a link in the ring network is considered faulty. When no packet is received, the link is considered normal. Specific information included in the notification packet may carry or not carry specific information about a faulty link, namely, indicating a specific faulty link. This is not limited in this application.

In a possible implementation, the link fault information includes that a second link is faulty. The second link is a link on which the first backbone port of the first backbone node is located. In S210, that the first backbone node obtains the link fault information of the ring network includes: The first backbone node determines that the second link is faulty.

In this application, the first backbone node may obtain fault information of the link on which the first backbone port of the first backbone node is located. In other words, if the second link in the ring network is faulty, the first backbone node may obtain fault information of the first backbone port based on port performance of the first backbone node. In this case, the second backbone port of the first backbone node cannot communicate with the outside, and the first backbone port of the first backbone node is in a blocked state. Therefore, no notification packet is received.

In this application, if the first link in the ring network is faulty, the first backbone node may receive the notification packet through the first backbone port of the first backbone node, to obtain the link fault information. If the second link is faulty, the first backbone node may directly obtain the link fault information.

In this application, that the second link is faulty includes but is not limited to the following possibilities: a link fault caused by a loosened first backbone port of the first backbone node, a link fault caused by a power failure of one port of a connected backbone node on the second link, or a link fault caused by a short circuit, an open circuit, or a disconnection of a communication cable on the second link.

S220: The first backbone node switches the second backbone port of the first backbone node to a forwarding state based on the link fault information.

When obtaining the link fault information, the first backbone node switches the second backbone port in the blocked state to the forwarding state. In other words, the first backbone node may learn based on the link fault information that a link is faulty in a current ring network, and therefore immediately switch the second backbone port originally in the blocked state to the forwarding state, to enable a standby link in the ring network. In this case, all normal nodes may continue to perform normal communication through a linear communication network formed by a standby link and a link that is not faulty, to complete communication in a fault state. This ensures communication security of an Ethernet system.

In this application, the first backbone node may learn link fault information of the ring network. The link fault information is used as an event trigger source. When the first backbone node obtains the information, the first backbone node switches a port in a blocked state to a forwarding state, to enable a standby link on which the port originally in the blocked state is located. After a port status is switched, the ring network can be restructured into a linear communication network for communication when a link is faulty. In the conventional technology, when a link is faulty, all nodes are silent, and then a new round of node election and link pruning are performed, to re-establish a communication connection between remaining links. Compared with that in the conventional technology, in this application, response time for switching between an active link and a standby link can be shortened, fast network restructuring can be implemented, and a requirement of an in-vehicle application can be met.

It should be noted that, in this application, a forwarding state (forward) of a port means that the port may transmit a physical layer (physical layer) signal, or may transmit a packet at Layer 2 and upper layers. A blocked state (block) of a port means that the port can transmit a physical layer (physical layer) signal, but cannot transmit packets at Layer 2 and upper layers. The packets at Layer 2 and upper layers are discarded when passing through the port.

It should be understood that a link in this application is a straight link between two nodes, in other words, no other nodes exist between the two nodes.

Optionally, if the first link is faulty, the method further includes: S230-a: The second backbone node switches the first backbone port of the second backbone node to a blocked state.

In this application, after the first link is faulty, the second backbone node may switch the first backbone port of the second backbone node to the blocked state. In this manner, after the first link is restored to normal, one port is still in a blocked state in the ring network. This avoids forming a network storm.

It is specially noted that, if the first link is faulty, two second backbone nodes on the ring network separately perform the step of sending the notification packet. However, only one of the two second backbone nodes switches a first backbone port of a second backbone node to a blocked state.

It should be understood that, in this application, the second backbone node sends a notification packet, and the first backbone node receives the notification packet. Whether the notification packet is forwarded by another backbone node in a transmission process is not limited. To be specific, the second backbone node may directly send the notification packet to the first backbone node through a link between the first backbone node and the second backbone node. Alternatively, the second backbone node may first send the notification packet to a backbone node connected to the second backbone node, and the notification packet arrives at the first backbone node after being forwarded once or multiple times.

Optionally, before S220, the second backbone node switches the first backbone port of the second backbone node to a blocked state.

In other words, before sending the notification packet, the second backbone node switches the first backbone port of the second backbone node to the blocked state. In this way, before the first backbone port of the second backbone node is switched to the blocked state, the second backbone port of the first backbone node is not switched to a forwarding state and the first link is not restored to normal. This helps ensure network security.

Optionally, the first backbone port of the second backbone node is a master port, and the second backbone port of the second backbone node is a slave port.

In peer to peer (peer to peer, P2P) communication, two connected ports in a link are respectively set as a master (master) port and a slave (slave) port. In addition, in a ring network, any link is always connected by using a master port and a slave port in pairs. If two master ports or two slave ports are directly connected, the communication fails. In a link formed by connecting a master port and a slave port in pairs, the master port actively sends a handshake signal to the slave port, to establish a communication connection with the slave port.

In this application, after the first link is faulty, the two second backbone nodes that send notification packets may detect whether the first backbone ports of the two second backbone nodes are master ports. When the first backbone ports of the two second backbone nodes are master ports, the second backbone node switches the first backbone port of the second backbone node to a blocked state. In other words, after a link is faulty, a connected master port in the faulty link is set to a blocked state. In this manner, after the faulty link is restored to normal, the master port in the link is in a blocked state. This can avoid a handshake signal on the link, to reduce communication overheads.

Optionally, in the solution of this application, the first backbone port of the second backbone node may alternatively be a master port, and the second backbone port of the second backbone node may be a slave port. In other words, a connected slave port in a faulty link may be switched to a blocked state. This is not limited in this application.

In other words, when switching logic of a node is configured, if a link is faulty, the second backbone node may detect whether the second backbone port of the second backbone node is a master port. When the second backbone port is a master port, the second backbone node switches the second backbone port of the second backbone port to a blocked state. Alternatively, a configuration may be: The second backbone node detects whether the second backbone port of the second backbone node is a slave port. When the second backbone port of the second backbone node is a slave port, the second backbone node switches the second backbone port of the second backbone node to a blocked state. It should be understood that, regardless of the foregoing configuration manner, the switching logic configured on each backbone node should be the same, to avoid switching confusion.

It should be understood that, both the first backbone port and the second backbone port of the second backbone node are in a forwarding state. In a possible implementation, the first link may alternatively be a link on which the second backbone port of the second backbone node is located, so that a port sending a notification packet may alternatively be the first backbone port of the second backbone node. This is not limited in this application.

In a possible implementation, the notification packet is a bridge protocol data unit (bridge protocol data unit, BPDU) packet.

In this application, a BPDU packet in an existing STP/RSTP protocol may be used, and a trigger condition of the BPDU packet is changed, to implement fast network restructuring, implement better compatibility with the existing protocol, reduce excessive configuration operations. Therefore, the BPDU packet is simple and easy to implement.

Optionally, the notification packet may alternatively be a broadcast packet of the Internet group management protocol (Internet group management protocol, IGMP), that is, the link fault information is sent in a broadcast manner. The notification packet may alternatively be a directed multicast packet. All backbone nodes form a multicast group, and a notification is performed by sending a multicast packet. The notification packet may alternatively be a media access control (media access control, MAC) multicast packet. The link fault information is notified by using the MAC layer multicast packet. Optionally, the notification packet may alternatively be a directional unicast packet, and is directionally sent by a backbone node.

It should be understood that, in this application, the notification packet may be generated by a backbone node before the backbone node detects a link fault, that is, the link fault information is only used as a trigger source for the backbone node to send the notification packet. Alternatively, after detecting a link fault, a backbone node may generate a notification packet and then send the notification packet. This is not limited in this application.

It should be understood that, the foregoing specific type of the notification packet is merely an example for description. A format and a name of the notification packet are not limited in this application, provided that a function similar to that in this application is implemented, that is, the notification packet is sent when a link is faulty, and the notification packet may enable a port originally in a blocked state in the ring network to switch to a forwarding state, which all fall within the protection scope of this application.

Optionally, if the second link is faulty, the method further includes: S230-b: The first backbone node switches the first backbone port of the first backbone node to a blocked state.

When the first backbone node determines that the second link is faulty, the first backbone node switches the first backbone port of the first backbone node to the blocked state. In this manner, when the second link is restored to normal, one port is still in a blocked state in the ring network. This avoids a network storm, and ensures communication security.

Optionally, the first backbone node performs S230-b before S220, that is, the first backbone node first switches the first backbone port of the first backbone node to a blocked state before switching the second backbone port of the first backbone node to a forwarding state.

It should be understood that, the first backbone port of the first backbone node may be a master port or a slave port. Correspondingly, the second backbone node of the first backbone node may be a slave port or a master port. That is, in an initial state, a port in a blocked state in the ring network may be a master port or a slave port. This is not limited in this application.

It should be further understood that, in this application, physical hardware of the master port and physical hardware of the slave port are the same, but port configurations are different. For example, different identifiers may be configured for two ports to distinguish between the master port and the slave port.

In a possible implementation, a fourth link may be a link on which the second backbone port of the first backbone node is located, and the second backbone port of the first backbone node is directly connected to the first backbone port of the second backbone node. That is, the fourth link and the first link may be a same link. When the first link (the fourth link) is faulty, the first backbone node may detect that the link on which the second backbone port of the first backbone node is located is faulty. In addition, the second backbone node further sends a notification packet through the second backbone node of the second backbone node, so that the first backbone node may receive the notification packet through the first backbone port of the first backbone node. The first backbone node may switch the second backbone port of the first backbone node to a forwarding state when detecting that the link on which the second backbone port of the first backbone node is located is faulty or when receiving the notification packet. Optionally, the first backbone node may further determine the second backbone port of the first backbone node as a master port (or a slave port), and further switch the second backbone port of the first backbone node to a blocked state again. Alternatively, the second backbone node may determine the first backbone port of the second backbone node as a master port (or a slave port), and further switch the first backbone port of the second backbone node to a blocked state.

Optionally, when detecting that the fourth link is faulty, the first backbone node confirms that a standby link in the ring network is faulty. Therefore, even if a notification packet is received, a port status may not be switched.

In a possible implementation, how the second backbone node determines that the first link is faulty includes: The second backbone node determines, through differential signal diagnosis, that the first link is faulty.

Differential signal diagnosis is a link diagnosis technology at an Ethernet physical layer. Specifically, a node may detect a voltage difference and a carrier waveform transmitted on a twisted pair connected to a port of the node. When the transmitted voltage difference and/or carrier waveform are/is abnormal, a link fault may be determined.

Therefore, in this application, the link fault is detected through differential signal diagnosis, so that the link fault can be quickly discovered. Further, response time for switching between an active link and a standby link is shortened, fast network restructuring is implemented, and a requirement of an in-vehicle application is ensured.

Optionally, in this application, how the second backbone node determines that the first link is faulty may alternatively be: The second backbone node determines, by using a connectivity check packet, that the first link is faulty.

Specifically, the second backbone node may periodically send connectivity check packets on the first backbone port of the second backbone node. The second backbone node determines whether a response packet of another connected port in the first link is received within valid time, to determine whether the first link is normal.

It should be understood that the foregoing fault diagnosis and discovery methods are merely examples, and do not constitute a limitation on this application. A person skilled in the art may also discover a link fault in another manner. For example, a link up state is detected through a link heartbeat.

Similarly, how the first backbone node determines that the second link is faulty includes: The first backbone node determines, through differential signal diagnosis, that the second link is faulty. Alternatively, the first backbone node determines, by using a connectivity check packet, that the second link is faulty. Alternatively, another manner may be used.

In a possible implementation, each of the M backbone nodes includes a first identifier. The first identifier is used to identify a backbone node in the network.

In this application, the first identifier is configured for the backbone node in the ring network, so that the backbone node having the first identifier sends a notification packet based on a link status, or switches a port in a blocked state to a forwarding state when receiving a notification packet. Alternatively, when receiving a notification packet, the backbone node continues to forward the notification packet in the ring network, to implement switching between an active link and a standby link and network restructuring. A node having no first identifier does not belong to a backbone node in the ring network, and does not send or identify a notification packet. In other words, backbone nodes in the network may be distinguished by using the first identifier.

The foregoing manner is merely an example for description. Alternatively, backbone nodes may be identified by using another node in the network, to distinguish between a backbone node and a non-backbone node. This is not limited in this application.

Optionally, the method 200 further includes S240. The first backbone node detects the first identifier. The first backbone node determines based on the first identifier that the first backbone node is a backbone node in the network.

Similarly, the method 200 further includes S250. The second backbone node detects the first identifier. The second backbone node determines based on the first identifier that the second backbone node is a backbone node in the network.

In a possible implementation, the first identifier may be a value written into a register, and is used to identify a backbone node. The backbone node is determined by powering the node on and reading a value in a register. Further, switching logic of the backbone node is executed. For example, if a link on which a backbone port in a forwarding state is located is faulty, a notification packet is sent through another backbone port in a forwarding state. Alternatively, if a port of a backbone node is in a blocked state, when receiving a notification packet, the backbone node may switch the port in the blocked state to a forwarding state. Alternatively, when two backbone ports of a backbone node are in a forwarding state and the backbone node receives a notification packet, the backbone node continues to forward the notification packet in the ring network.

The following describes a configuration process and a power-on detection process of a backbone node.

Step 1: Configure a network access device as a backbone node, for example, identify a backbone node by using the first identifier, and configure two backbone ports of the backbone node.

Step 2: Configure port familiarity for all backbone ports of all backbone nodes, identify a state of the backbone ports, and specify one port of all backbone nodes to be in a blocked state and all other ports to be in a forwarding state. Configure running logic for each backbone node.

Step 3: Configure a power-on networking time jitter difference register and configure a power-on startup time jitter difference to eliminate network switching flapping caused by a power-on jitter difference.

Step 4: Power on the backbone node to enable a working status and running logic of the backbone node. The running logic of the backbone node is the network establishing method 200 mentioned above.

Step 5: If the running logic includes a switching limit of the backbone node, when any port of the backbone node reaches the switching limit, the port stops switching a state, retains the current last set state, and sends a network link exception notification and over-limit port switching information. After restart or software clearing, a status alarm is cleared and a function is restored.

The foregoing method 200 is described below by using an example with reference to FIG. 3. FIG. 3 is a schematic block diagram of an Ethernet system 300 according to an embodiment of this application.

As shown in FIG. 3, the Ethernet system 300 includes four backbone nodes: a node 310, a node 320, a node 330, and a node 340, that is, M = 4. Each of the node 310, the node 320, the node 330, and the node 340 includes two backbone ports P1 and P2. Ports P1 and ports P2 are connected in pairs to form a ring network. For ease of description, a link (link) on which the port P2 of the node 310 is connected to the port P1 of the node 340 is referred to as a link L1. L1 may also be referred to as a link on which the port P2 of the node 310 is located, or a link on which the port P1 of the node 340 is located. Similarly, L4 is a link on which the port P2 of the node 320 is located or a link on which the port P1 of the node 310 is located. L2 is a link on which the port P2 of the node 330 is located or a link on which the port P1 of the node 320 is located. L3 is a link on which the port P2 of the node 340 is located or a link on which the port P1 of the node 330 is located. The port P1 (one side of the first backbone port) of the node 310 (a first backbone node) is in a forwarding state. The port P2 (one side of the second backbone port) of the node 310 is in a blocked state. Any nodes other than the node 310, namely, ports P1 and ports P2 of the node 320, the node 330, and the node 340 are in a forwarding state. This can avoid a Layer 2 loop. In this case, L1 is a standby link, and L2, L3, and L4 form an active link.

It should be understood that, because the port P2 of the node 310 is in a blocked state, packets at Layer 2 and upper layers cannot be forwarded when passing through the port, but the L1 link is normal. To be specific, the packets at Layer 2 and upper layers sent by the node 340 through the port P1 may be transmitted to the port P2 of the node 310 through the link L1, but are not forwarded when arriving at the port P2 of the node 310.

When the link L2 (one side of the first link) is faulty at a moment, the node 320 (one side of the second backbone node) may detect that the link on which the port P1 (one side of the second backbone port) of the node 320 is located is faulty. The fault information is used as a trigger source. The node 320 sends a BPDU packet (one side of the notification packet) through the port P2 of the node 320. The BPDU packet passes through the link L4. The node 310 receives the BPDU packet through the port P1 of the node 310. When receiving the BPDU packet, the node 310 learns that a link is faulty in the ring network. Therefore, the node 310 immediately switches the port P2 of the node 310 to a forwarding state, so that the standby link L1 is enabled.

When the link L2 is faulty, the node 330 also detects that the link on which the port P2 (one side of the second backbone port) of the node 330 is located is faulty. The fault information is used as the trigger source. The node 330 also sends a BPDU packet, and the node 330 sends the BPDU packet through the port P1 of the node 330. The BPDU packet passes through the link L3. The node 340 receives the BPDU packet through the port P2 of the node 340. The node 340 determines that the port P1 of the node 340 is in a forwarding state, and therefore forwards the BPDU packet through the port P1 of the node 340. However, because the port P2 of the node 310 is in the blocked state, the node 310 cannot receive the BPDU packet through the port P2 of the node 310.

It can be known from the above that, when the link L2 is faulty, the node 310 may learn, as triggered by the notification packet, that a link is faulty in the ring network, and therefore immediately switch the port P2 of the node 310 to a forwarding state, so that the standby link L1 is enabled. Further, a new linear link formed by the links L4, L1, and L3 may still be used for normal communication of the node 310, the node 320, the node 330, and the node 340. Compared with that in a method such as a new round of node election in the technology, in this application, response time for switching between an active link and a standby link can be shortened, fast network restructuring can be implemented, and a requirement of an in-vehicle application can be met.

Optionally, the node 330 further switches the port P2 of the node 330 to a blocked state, or the node 320 further switches the port P1 of the node 320 to a blocked state.

Optionally, the method further includes: restoring L2 to normal, and restoring a physical connection between the node 320 and the node 330 by using L2. One of the port P1 of the node 320 and the port P2 of the node 330 is in a blocked state and cannot forward data. In this case, the ring network is restored to an initial state, and L2 becomes a new standby link in the ring network.

Optionally, before the node 330 sends a BPDU packet, the node 330 switches the port P2 of the node 330 to a blocked state. Alternatively, before the node 320 sends a BPDU packet, the node 320 switches the port P1 of the node 320 to a blocked state.

In a possible implementation, all ports P1 in FIG. 3 are set as master ports, and all ports P2 are set as slave ports. When port switching is performed, a connected master port in a faulty link may be switched to a blocked state by default. To be specific, the port P1 of the node 320 is set to a blocked state, and the port P2 of the node 330 remains in a forwarding state.

Optionally, when port switching is performed, a connected slave port in a faulty link may be switched to a blocked state by default. To be specific, the port P2 of the node 330 is set to a blocked state, and a state of the port P1 of the node 320 remains unchanged and is still a forwarding state.

Optionally, when the link L2 is faulty, it may alternatively be that the node 330 is faulty (for example, a power failure). Consequently, the links L2 and L3 are faulty at the same time. In this case, the node 340 detects that the link on which the port P2 of the node 340 is located is faulty, and therefore sends a BPDU packet through the port P1 of the node 340. The node 320 detects that the link on which the port P1 of the node 320 is located is faulty, and therefore sends a BPDU packet through the port P2 of the node 320. For running logic of the node 340, refer to the foregoing node 330. Running logic of the node 320 is similar to the foregoing node 320. Details are not described herein again.

Optionally, in the ring network shown in FIG. 3, if the link L4 (one side of the second link) is faulty, the node 310 may determine that the link on which the port P1 of the node 310 is located is faulty, and the node 310 switches the port P2 of the node 310 to a forwarding state based on link fault information, so that the standby link L1 is enabled.

Optionally, if the link L4 is faulty, the node 310 may further switch the port P1 of the node 310 to a blocked state.

For example, in the ring network shown in FIG. 3, if the link L1 (one side of the fourth link) is faulty, the node 310 detects that the link on which the port P2 of the node 310 is located is faulty, and the node 340 (one side of the second backbone node) also detects that the link on which the port P1 of the node 340 is located is faulty. Therefore, a BPDU packet is sent through the port P2 of the node 340. The BPDU packet is used to notify a link fault in the ring network. The BPDU packet is forwarded by the node 330 and the node 320, and the node 310 receives the BPDU packet through the node P1 of the node 310. Optionally, when the node 310 detects that the link on which the port P2 of the node 310 is located is faulty or receives the BPDU packet, the node 310 may learn that a link is faulty in the ring network, and switch the port P2 of the node 310 to a forwarding state.

Optionally, in FIG. 3, all ports P1 are set as master ports, and all ports P2 are set as slave ports. When port switching is performed, a master port connected to a faulty link may be switched to a blocked state by default. To be specific, when L1 is faulty, the node 340 may switch the port P1 of the node 340 to a blocked state, and a state of the port P2 of the node 310 remains unchanged and is still a forwarding state. Alternatively, when port switching is performed, a slave port connected to a faulty link may be switched to a blocked state by default. To be specific, when L1 is faulty, the node 310 may switch the port P2 of the node 310 to a blocked state, and a state of the port P1 of the node 340 remains unchanged and is still a forwarding state. In other words, after state switching, there may be two cases.
1. The port P2 of the node 310 is in a forwarding state, and the port P1 of the node 340 is in a blocked state; or
2. The port P2 of the node 310 is still in a blocked state, and the port P1 of the node 340 is still in a forwarding state.

Optionally, if the link L1 is faulty, the node 310 may determine that the link on which the port P2 of the node 310 is located is faulty, and the port P2 of the node 310 is in a blocked state. That is, the node 310 may determine that the standby link in the ring network is faulty. Therefore, when the BPDU packet is received, state switching may not be performed.

In FIG. 3, each of the node 310, the node 320, the node 330, and the node 340 includes an identifier a. The backbone node is determined by powering the node on and reading a value a of a register, to perform the foregoing method 200.

In FIG. 3, for a method for determining a link fault by the node 310, the node 320, the node 330, and the node 340, refer to the foregoing description. Details are not described herein again.

It should be understood that, in FIG. 3, an example in which only four backbone nodes are connected to form a ring network is used for description. A quantity of backbone nodes forming the ring network may alternatively be 3, 5, 128, or the like. This is not limited in this application.

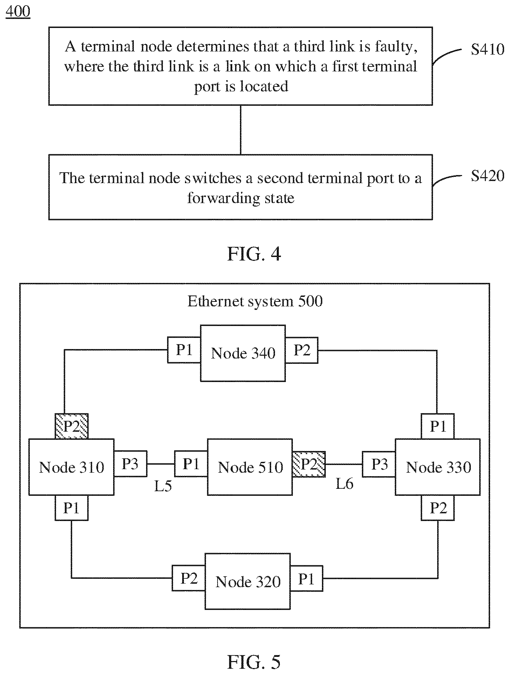

FIG. 4 is a schematic flowchart of a network establishing method 400 according to an embodiment of this application. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node. The network further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes.

In this application, the ring network may further access one or more terminal nodes. The terminal node is connected to two backbone nodes in the ring network by using the first terminal port and the second terminal port of the terminal node. The first terminal port of the terminal node may be set to a forwarding state, and the second terminal port may be set to a blocked state. That is, a link on which the first terminal port is located is an active link, and a link on which the second terminal port is located is a secondary link, so that redundant access of the terminal node is implemented. As shown in FIG. 4, the method 400 includes the following steps.

S410: The terminal node determines that a third link is faulty. The third link is a link on which the first terminal port is located.

In this application, that the third link is faulty includes but is not limited to the following possibilities: a link fault caused by a loosened first terminal port of a terminal node, a link fault caused by a power failure of a backbone node of another connected port in the third link, or a link fault caused by a short circuit, an open circuit, a disconnection of a communication cable on the third link.

S420: The terminal node switches the second terminal port to a forwarding state.

In other words, when the terminal node determines that the third link is faulty, the terminal node may switch the second terminal port from a blocked state to a forwarding state, to enable a standby link on which a blocked port is located. This ensures communication security.

In this application, the terminal node may learn link fault information of an active link and a standby link of the terminal node. The link fault information is used as an event trigger source. When the terminal node obtains the information, the terminal node switches a port in a blocked state to a forwarding state, to enable a standby link on which the port originally in the blocked state is located. Compared with that in the conventional technology, in this application, a device other than the terminal node does not need to participate in control and processing, and fast switching between an active link and a standby link is completed under configuration logic inside the terminal node. Therefore, response time for switching between an active link and a standby link can be shortened, fast network restructuring can be implemented, and a requirement of an in-vehicle application can be met.

Optionally, before the terminal node switches the second terminal port to the forwarding state, the method 400 further includes S430. The terminal node switches the first terminal port to a blocked state.

In other words, the terminal node may switch a connected second terminal port in the first link to a blocked state, so that the first link becomes a standby link, and the link on which the first terminal port is located becomes an active link. In this manner, after the third link is restored to normal, accessing a terminal node does not result in a new ring network topology and a complex network with a plurality of nested rings. This ensures reliability of a communication system.

In addition, in this manner, after the third link is restored to normal, there are still one active link and one standby link for two links through which the terminal node accesses the ring network. In this manner, both links of the terminal node may be prevented from communicating with the ring network. This resolves a problem that a complex network topology may be constructed due to redundant access of the terminal node, and improves reliability of redundant access of an important terminal node.

In a possible implementation, in S410, how the terminal node determines that the third link is faulty includes: The terminal node determines, through differential signal diagnosis, that the third link is faulty.

For specific descriptions of differential signal diagnosis, refer to the foregoing method 200. Details are not described herein again.

In this application, the link fault is detected through differential signal diagnosis, so that the link fault can be quickly discovered. Further, response time for switching between an active link and a standby link is shortened, fast network restructuring is implemented, and a requirement of an in-vehicle application is ensured.

In other words, in this application, switching between an active link and a standby link can be implemented at a physical layer, so that efficiency is higher.

Optionally, in this application, how the terminal node determines that the third link is faulty in S410 may alternatively be: The terminal node determines, by using a connectivity check packet, that the first link is faulty.

It should be understood that the foregoing fault diagnosis and discovery methods are merely examples, and do not constitute a limitation on this application. A person skilled in the art may also discover a link fault in another manner. For example, a link up state is detected through a link heartbeat.

It should be understood that, in this application, the link fault includes but is not limited to the following possibilities: a link fault caused by a loosened port, a link fault caused by a power failure of a backbone node, or a link fault caused by a short circuit and an open circuit of a communication cable on a link.

Optionally, in the method 400, the terminal node includes a second identifier. The second identifier is used to identify a terminal node in an Ethernet system.

In this application, the second identifier is configured for the terminal node in the Ethernet system, so that the terminal node having the second identifier does not identify or forward a notification packet in the Ethernet system, nor switch a state of a port under the effect of a notification packet. That is, the terminal node having the second identifier only monitors states of active and standby links of the terminal node, and does not participate in switching logic of a backbone network.

The foregoing manner is merely an example for description. Alternatively, terminal nodes may be identified by using another node in the Ethernet system, to distinguish between a terminal node and a non-terminal node.

Optionally, the method 400 further includes: S440: The terminal node detects the second identifier. The terminal node determines, based on the second identifier, that the terminal node is a terminal node in the network.

In a possible implementation, the second identifier may be a value written into a register, and is used to identify a terminal node. The terminal node is determined by powering the terminal node on, and reading a value in a register. Further, switching logic of the terminal node is executed. To be specific, if a link on which a terminal port is located is faulty, a standby link is enabled to complete switching between an active link and a standby link. This ensures communication security.

It should be understood that, in this application, when the terminal node determines that the link on which the second terminal port is located is faulty, the terminal node may not perform any operation. When the link on which the second terminal port is located is restored to normal, the second terminal port is still in a blocked state, and the link on which the second terminal port is located is still a standby link.

Therefore, in this application, the first identifier and the second identifier are used, so that switching logic of the terminal node and switching logic of the backbone node are independent of each other, and do not interfere with each other. This helps improve reliability and simplicity of the Ethernet system.

The following describes a configuration process and a power-on detection process of a terminal node.

Step 1: Configure a network access device as a terminal node, for example, identify a terminal node by using the second identifier, and configure two terminal ports of the terminal node.

Step 2: Set one of the two terminal ports of the terminal node to a blocked state and the other to a forwarding state, configure running logic of the terminal node, and connect the terminal node to a backbone node of the ring network.

Step 3: Configure a power-on networking time jitter difference register and configure a power-on startup time jitter difference to eliminate network switching flapping caused by a power-on jitter difference.

Step 4: Power on the terminal node to enable a working status and running logic of the terminal node. The running logic of the terminal node is the network establishing method 400 mentioned above.

Step 5: If the running logic includes a switching limit of the terminal node, when the terminal node meets a set limit, the terminal node is disabled, or enabled again until signal quality of active and standby links is restored, or enabled after next restart and power-on, or a management device sets a subsequent action. If no switching limit is set, the terminal device performs free diagnosis and switching based on link signal quality and settings.

The foregoing method 400 is described below by using an example with reference to FIG. 5. FIG. 5 is a schematic block diagram of an Ethernet system 500 according to an embodiment of this application.

As shown in FIG. 5, the Ethernet system 500 includes four backbone nodes: a node 310, a node 320, a node 330, and a node 340, that is, M = 4. Each of the node 310, the node 320, the node 330, and the node 340 includes two backbone ports P1 and P2. Ports P1 and ports P2 are connected in pairs to form a ring network. The Ethernet system 500 further includes a terminal node, namely, a node 510. The node 510 includes the port P1 (one side of the first terminal port) and the port P2 (one side of the second terminal port). The port P1 of the node 510 is in a forwarding state. The port P2 of the node 510 is in a blocked state. Each of the node 310 and the node 330 further includes a port P3 (one side of the third terminal port). The port P3 of the node 310 is connected to the port P1 of the node 510, to form a link L5. The port P3 of the node 330 is connected to the port P2 of the node 510, to form a link L6.

In FIG. 5, the node 510 accesses the ring network through the port P3 (one side of the third terminal port) of the node 310 and the port P3 of the node 330 (one side of the at least two backbone nodes), to implement redundant access. If any terminal port of the node 510, for example, the port P2, is set to a blocked state, the link L6 can transmit only a physical layer signal, but cannot transmit data. Therefore, L6 is a standby link. In addition, the port P1 of the node 510 is in a forwarding state, that is, the link L5 is an active link. The node 510 may communicate with the ring network through L5.

When L5 (one side of the third link) is faulty, the node 510 detects that a link on which the port P2 of the node 510 is located is faulty. The fault information is used as an event trigger source, so that the node 510 can switch the port P2 of the node 510 to a forwarding state, that is, the standby link is enabled, so that the node 510 communicates with the ring network through L6. Therefore, in this application, response time for switching between an active link and a standby link can be shortened, fast network restructuring can be implemented, and a requirement of an in-vehicle application can be met.

Optionally, L5 may further switch the port P1 of L5 to a blocked state, to prevent both links of the terminal node from communicating with the ring network. This resolves a problem that a complex network topology may be constructed due to redundant access of the terminal node, and improves reliability of redundant access of an important terminal node.

For example, a fault of L5 may be a fault caused by a fault of the node 310 or an abnormal port P3 of the node 310, or a fault caused by an abnormal cable of L5.

Optionally, the node 510 determines, through differential signal diagnosis, that L5 is faulty.

Optionally, the node 510 includes an identifier b. After being powered on, the node 510 determines, by reading a value b of a register, that the node 510 is a backbone node, to perform the foregoing method 400.

Optionally, the method 400 further includes: restoring L5, and restoring a physical connection between the node 510 and the node 310 by using L5. The port P1 of the node 510 is in a blocked state and cannot forward data. In this case, L5 becomes a new standby link of the node 510.

It should be understood that, in FIG. 5, an example in which only four backbone nodes are connected to form a ring network is used for description. A quantity of backbone nodes forming the ring network may alternatively be 3, 5, 128, or the like. This is not limited in this application. In addition, in FIG. 5, backbone nodes connected to the node 510 may be any two backbone nodes of the node 310, the node 320, the node 330, and the node 340. Moreover, two or more terminal nodes may be accessed in the ring network, and backbone nodes connected to a plurality of terminal nodes may be the same or different. This is not limited in this application.

In a possible implementation, the method 200 and the method 400 may be combined to form another network establishing method. For example, a network includes M backbone nodes and at least one terminal node. The procedure in the method 200 is used to switch between an active link and a standby link of the backbone network. The procedure in the method 400 is used to switch between an active link and a standby link of the terminal node. For a specific procedure, refer to the descriptions in the method 200 and the method 400. Details are not described herein again.

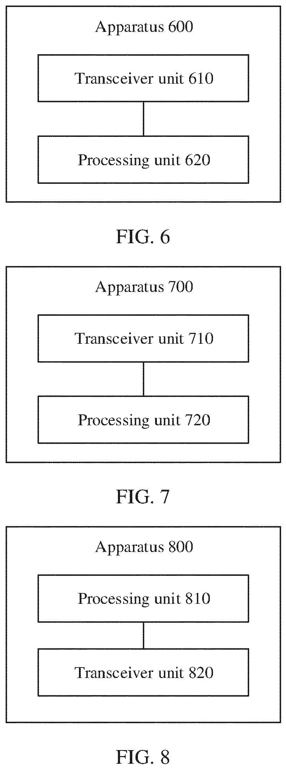

The foregoing describes the network establishing method in this application with reference to FIG. 1 to FIG. 5. The following describes apparatuses in embodiments of this application with reference to FIG. 6 to FIG. 8. It should be understood that the apparatuses shown in FIG. 6 to FIG. 8 may implement the steps in the foregoing methods. For brevity, details are not described herein again.

FIG. 6 is a schematic diagram of a structure of a network establishing apparatus according to an embodiment of this application. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node.

As shown in FIG. 6, the apparatus 600 may include a transceiver unit 610 and a processing unit 620. Optionally, the apparatus is the first backbone node. The transceiver unit 610 is configured to obtain link fault information of the ring network. The processing unit 620 is configured to switch the second backbone port of the first backbone node to a forwarding state based on link fault information.

Optionally, the transceiver unit 610 is specifically configured to: receive a notification packet through the first backbone port of the first backbone node. The notification packet is used to indicate that a first link is faulty. The first link is a link on which the first backbone port of the second backbone node is located.

Optionally, the notification packet is a bridge protocol data unit BPDU packet.

Optionally, the processing unit 620 is further configured to determine that a second link is faulty. The second link is a link on which the first backbone port of the first backbone node is located.

Optionally, the processing unit 620 is further configured to switch the first backbone port of the first backbone node to a blocked state.

Optionally, the processing unit 620 is specifically configured to determine, through differential signal diagnosis, that the second link is faulty.

Optionally, each of the M backbone nodes includes a first identifier. The first identifier is used to identify a backbone node in the network.

Optionally, the processing unit 620 is further configured to: detect the first identifier; and determine, based on the first identifier, that the processing unit 620 is a backbone node in the network.

FIG. 7 is a schematic diagram of a structure of a network establishing apparatus according to an embodiment of this application. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node.

As shown in FIG. 7, the apparatus 700 may include a transceiver unit 710 and a processing unit 720. Optionally, the apparatus is the second backbone node. The processing unit 720 is configured to determine that a first link is faulty. The first link is a link on which a first backbone port of the second backbone node is located. The transceiver unit 710 is configured to send a notification packet through a second backbone port of the second backbone node. The notification packet is used to indicate that the first link is faulty.

Optionally, the processing unit 720 is further configured to switch the first backbone port of the second backbone node to a blocked state.

Optionally, the first backbone port of the second backbone node is a master port, and the second backbone port of the second backbone node is a slave port.

Optionally, the processing unit 720 is specifically configured to determine, through differential signal diagnosis, that the first link is faulty.

Optionally, each of the M backbone nodes includes a first identifier. The first identifier is used to identify a backbone node in the network.

Optionally, the processing unit 720 is further configured to: detect the first identifier; and determine, based on the first identifier, that the processing unit 720 is a backbone node in the network.

Optionally, the notification packet is a bridge protocol data unit BPDU packet.

FIG. 8 is a schematic diagram of a structure of a network establishing apparatus according to an embodiment of this application. A network includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. The network further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes.

As shown in FIG. 8, the apparatus 800 includes a processing unit 810. Optionally, the apparatus is the terminal node. The processing unit 810 is configured to determine that a third link is faulty. The third link is a link on which the first terminal port is located. The processing unit 810 is further configured to switch the second terminal port to a forwarding state.

Optionally, the processing unit 810 is further configured to switch the first terminal port to a blocked state.

Optionally, the processing unit 810 is specifically configured to determine, through differential signal diagnosis, that the third link is faulty.

Optionally, the terminal node includes a second identifier. The second identifier is used to identify a terminal node in the network.

Optionally, the processing unit 810 is further configured to: detect the second identifier; and determine, based on the second identifier, that the processing unit 810 is a terminal node in the network.

Optionally, the apparatus 800 may further include a transceiver unit 820, configured to send and receive data.

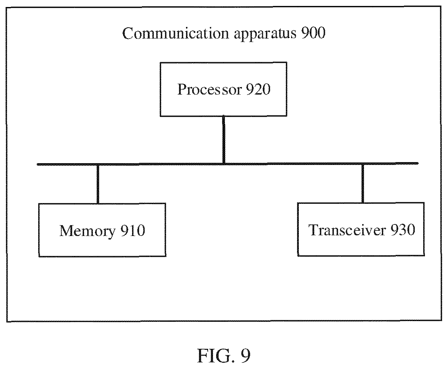

FIG. 9 is a schematic diagram of a structure of a network establishing apparatus 900 according to an embodiment of this application. The apparatus 900 includes at least one memory 910 and at least one processor 920. The at least one memory 910 is configured to store a program, and the at least one processor 920 is configured to run the program, to implement the technical solutions of this application.

It should be understood that, the processor in embodiments of this application may be a central processing unit (central processing unit, CPU). The processor may be further another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not restrictive description, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

Optionally, the apparatus 900 may further include a transceiver 930, configured to perform a data receiving and sending function.

Specifically, the apparatus 900 may correspond to the first backbone node in the methods 200 and 400 according to embodiments of this application. The apparatus 900 may include units for the method performed by the first backbone node in the method 200 or 400. Alternatively, the apparatus 900 may correspond to the second backbone node in the method 200 or 400 according to embodiments of this application. The apparatus 900 may include units for the method performed by the second backbone node in the methods 200 and 400. Alternatively, the apparatus 900 may correspond to the terminal node in the method 400 according to embodiments of this application. The apparatus 900 may include units for the method performed by the terminal node in the method 400. It should be understood that a specific process in which the units perform the foregoing corresponding steps is described in detail in the foregoing method embodiments. For brevity, details are not described herein.

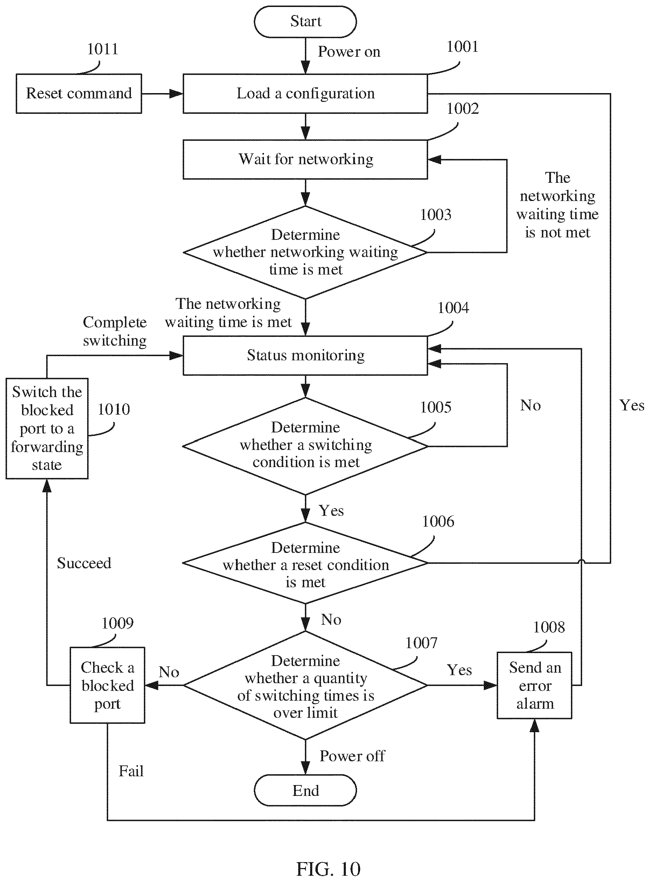

FIG. 10 is a schematic diagram of running logic of a backbone node according to an embodiment of this application. As shown in FIG. 10, switching logic includes the following steps.

S1001: Load a configuration.

Specifically, after a current node is powered on and enabled, configuration information of the current node is loaded. As described above, a node is configured as a backbone node and a port status is configured for the backbone node.

S1002: Wait for networking.

Specifically, this may implement a countdown to wait during network start, to prevent an error or a false fault report due to unexpected network switching caused by inconsistent startup time of nodes or devices.

S1003: Determine whether networking waiting time is met.

Specifically, if the networking waiting time is not met, or networking countdown is not 0, waiting for networking continues. If the networking waiting time is met, that is, when countdown is 0, status monitoring starts.

S1004: Status monitoring.

Specifically, a backbone node may monitor a state of a port of the backbone node, a state of a link connected by the backbone node, and a notification packet.

S1005: Determine whether a switching condition is met.

Specifically, whether the switching condition is met is determined based on the status of the port of the backbone node and the status of the link connected by the backbone node. If the switching condition is not met, status monitoring continues. If the switching condition is met, restriction check starts. The switching condition may be receiving a notification packet, or a fault state of the link connected by the backbone node.

S1006: Determine whether a reset condition is met.

Specifically, in an example, the reset condition may be clearing an accumulated quantity of switching times after stable communication for preset duration. When the reset condition is met, S1001 is performed again.

S1007: Determine whether a quantity of switching times is over limit.

Specifically, a quantity of switching times may be set to avoid frequent switching. When the quantity of switching times is over limit, a backbone node may send an error alarm.

The reset condition and the quantity of switching times each may be considered as one type of restriction check. The restriction check is used for security protection, to prevent network problems caused by frequent switching. In addition, the network is monitored. A network exception may directly trigger to reset a network status of the node, to rectify critical errors.

S1008: Send an error alarm.

Specifically, when the quantity of switching times is over limit or a node has an internal error, an alarm is mainly used to notify an administrator or an external device of a situation that the node is faulty.

S1009: Check a blocked port.

Specifically, it is mainly checked whether the blocked port is normal, whether an enabling condition is met, and the like. If the enabling condition is not met, an error alarm is generated and a state of the port is monitored for exception processing.

S1010: Switch the blocked port to a forwarding state.

Specifically, the following port switching operations are performed: enabling the blocked port to enter the forwarding state, and updating a forwarding entry.

S1011: Reset command.

The reset command is an external input command. It is used to perform status management on the current node in detail during network management, to restart a node network at any time. After a new configuration policy is loaded, the restart takes effect.

It should be understood that, the running logic shown in FIG. 10 is merely an example. In this embodiment of this application, running logic of a backbone node is not necessarily limited to the procedure shown in FIG. 10.

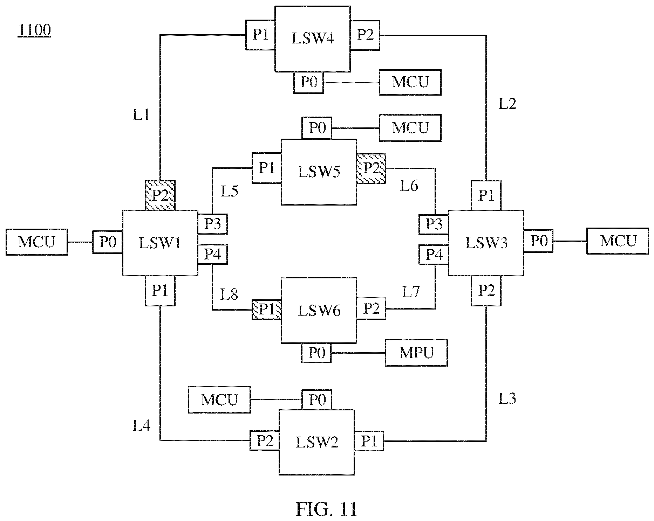

The method 200 and the method 400 in embodiments of this application are described below with reference to FIG. 11 to FIG. 17.

FIG. 11 is a schematic diagram of a network architecture 1100 according to an embodiment of this application. As shown in FIG. 11, in the network architecture 1100, LSW1, LSW2, LSW3, and LSW4 are backbone nodes, and LSW5 and LSW6 are terminal nodes. The ports P0 of LSW1, LSW2, LSW3, LSW4, and LSW5 are connected to an MCU, and the port P0 of LSW6 is connected to an MPU. For the backbone nodes in FIG. 11, all ports P1 are set as master ports, and all ports P2 are set as slave ports. In the network architecture 1100, the port P2 of LSW1 is in a blocked state, the port P2 of LSW5 is in a blocked state, the port P1 of LSW6 is in a blocked state, and other ports are in a forwarding state.

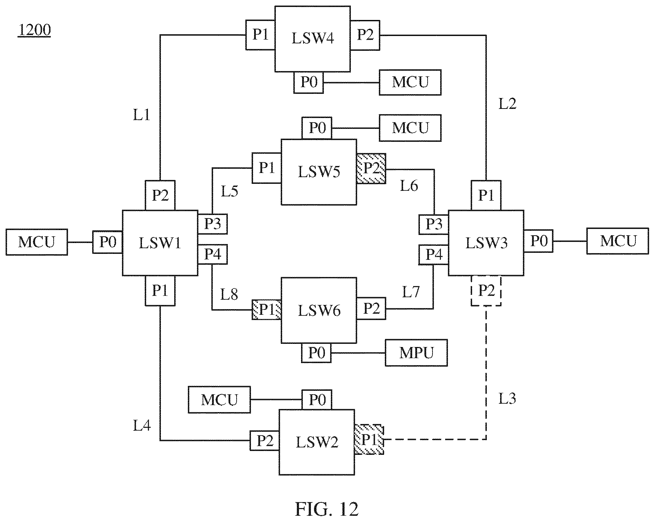

FIG. 12 is a schematic diagram of port status switching when a link is faulty according to an embodiment of this application.

It is assumed that the link L3 in the network architecture 1100 is faulty. The port P1 of LSW2 and the port P2 of LSW3 trigger a link down (link down) state in a port status register. Because the port P1 on LSW2 is a master port, LSW2 switches the port P1 to a blocked state. Further, the link down state is used as an event trigger source. LSW2 and LSW3 separately send BPDU packets. LSW3 sends a BPDU packet to LSW4 through the port P1, and the BPDU packet is forwarded by LSW4 to the port P2 of LSW1. However, the port P2 on LSW1 is initially blocked and cannot receive the BPDU packet from the port P2 on LSW4. LSW2 sends a BPDU packet to LSW1 through the port P2 of LSW2. After LSW1 receives the BPDU packet from the port P1 of LSW1, LSW1 switches the port P2 originally set to a blocked state to a forwarding state. A finally formed network architecture is shown in FIG. 12. The network architecture 1200 shown in FIG. 12 can still perform normal communication.

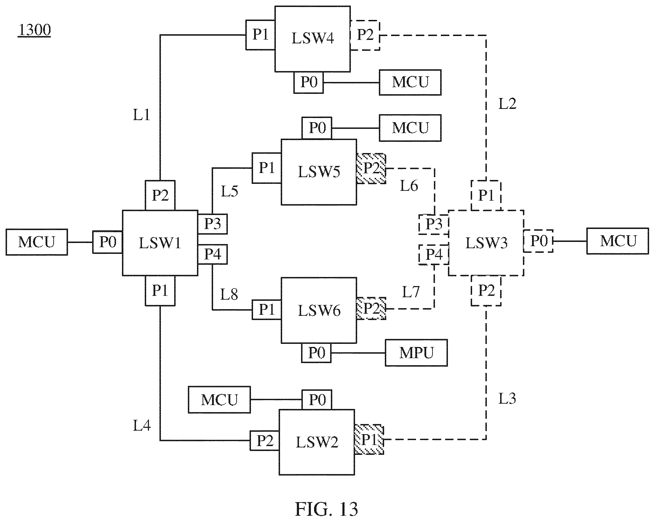

FIG. 13 is a schematic diagram of port status switching when a backbone node is faulty according to an embodiment of this application.

It is assumed that the backbone node LSW3 in the network architecture 1100 is powered off and exits networking, and the event triggers the links L2 and L3 down. Link down information of the port P2 of LSW4 triggers LSW4 to send a BPDU packet to LSW1 through the port P1 of LSW4. However, the port P2 of LSW1 is initially blocked and cannot receive the BPDU packet from the port P2 of LSW4. Because the port P1 on LSW2 is a master port, LSW2 switches the port P1 to a blocked state. Further, link down information of the port P1 of LSW2 triggers LSW2 to send a BPDU packet to LSW1 through the port P2 of LSW2. After LSW1 receives the BPDU packet from the port P1 of LSW1, LSW1 switches the port P2 originally set to a blocked state to a forwarding state.

In addition, LSW5 and LSW6 are connected to LSW3. If LSW3 is powered off, active and standby links of LSW5 and LSW6 are switched. Specifically, a power failure of LSW3 causes L6 down. Because the port P2 of LSW5 is in a blocked state, communication of LSW5 does not change. However, an active link of LSW6, namely, L7, is connected to LSW3. A power failure of LSW3 triggers L7 down. In this case, LSW6 performs switching between an active link and a standby link, that is, LSW6 switches the port P1 from a blocked state to a forwarding state, and blocks the port P2.

A finally formed network architecture is shown in FIG. 13. The network architecture 1300 shown in FIG. 13 can still perform normal communication.

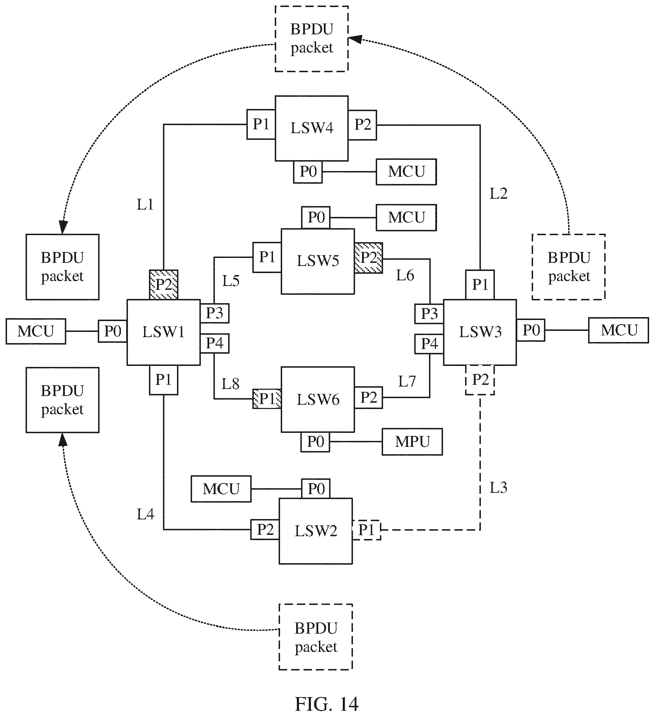

FIG. 14 is a schematic diagram of a transmission path of a BPDU packet when a link is faulty according to an embodiment of this application.

It is assumed that the link L3 in the network architecture 1100 is faulty. The port P2 of LSW2 and the port P1 of LSW3 trigger a link down (link down) state in a port status register. The link down state is used as an event trigger source. LSW2 and LSW3 separately send BPDU packets. FIG. 14 shows a process of sending BPDU packets.

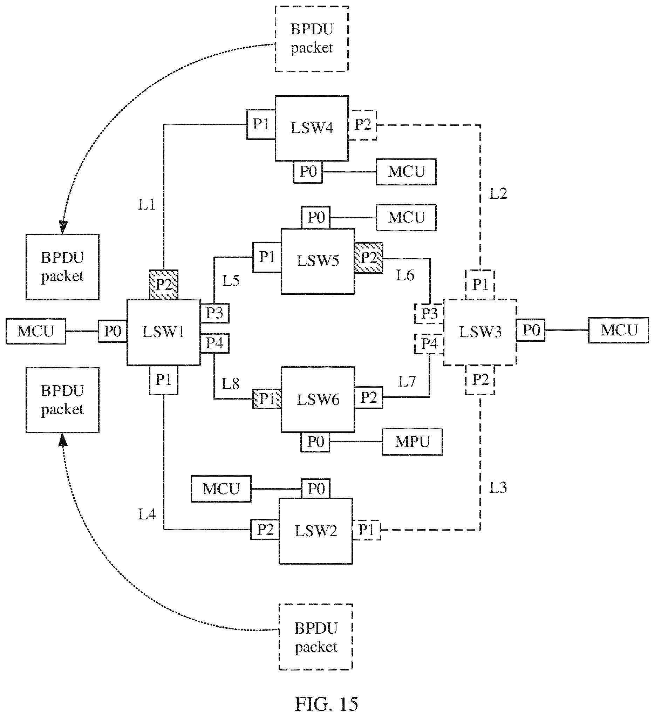

FIG. 15 is a schematic diagram of a transmission path of a BPDU packet on a backbone node according to an embodiment of this application.

It is assumed that LSW3 in the network architecture 1100 is powered off and exits networking. The port P2 of LSW2 and the port P1 of LSW4 trigger a link down (link down) state in a port status register. The link down state is used as an event trigger source. LSW2 and LSW4 separately send BPDU packets. FIG. 15 shows a process of sending BPDU packets.

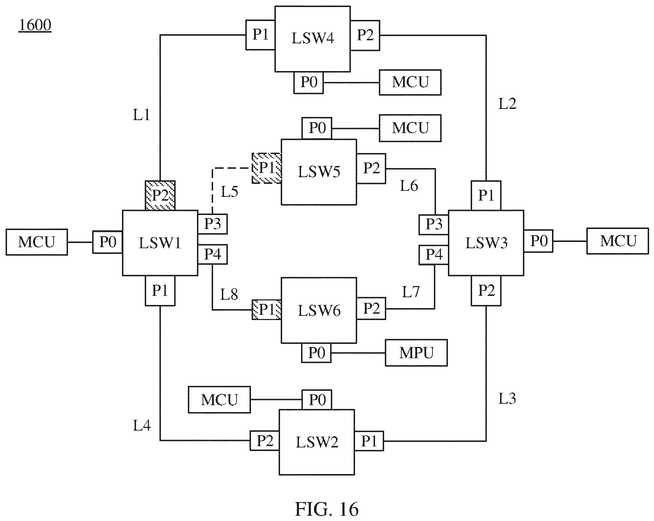

FIG. 16 is a schematic diagram of port status switching when a link of a terminal node is faulty according to an embodiment of this application.

It is assumed that L5 in the network architecture 1100 is faulty. A link down state of LSW5 port status register triggers link switching logic of LSW5. Specifically, when the port P2 of LSW5 meets a link up (link up) state, LSW5 enables the port P2 of LSW5 and sets the port P2 to a forwarding (Forward) state, so that the port P2 undertakes data exchange of LSW5. In addition, LSW5 changes the port P1 of LSW5 to a blocked (Block) state. When the link is restored, the link is enabled. However, when the port P1 is in a blocked (Block) state, the port P1 does not forward any data packet to a network, to prevent a data loop on the network. A finally formed network architecture is shown in FIG. 16. The network architecture 1600 shown in FIG. 16 can still perform normal communication.

An embodiment of this application further provides a computer-readable storage medium. The computer-readable storage medium has program instructions. When the program instructions are directly or indirectly executed, the technical solutions of this application are implemented.

An embodiment of this application further provides a computer program product including instructions. When the computer program product runs on a computing device, the computing device is enabled to perform the technical solutions in this application, or the computing device is enabled to implement functions of the controller described above.

An embodiment of this application further provides a chip, including at least one processor and an interface circuit. The interface circuit is configured to provide program instructions or data for the at least one processor. The at least one processor is configured to execute the program instructions, to implement the technical solutions of this application.

It should be understood that when the apparatuses 600, 700, 800, and 900 each are a chip or a chip system, the transceiver or the transceiver unit of the apparatus may be an input/output interface. The receiver or the receiving unit may be understood as an input interface, and the transmitter or the sending unit may be understood as an output interface.

The following describes an Ethernet system in an embodiment of this application.

An embodiment of this application provides an Ethernet system. The Ethernet system includes M backbone nodes. Each of the M backbone nodes includes a first backbone port and a second backbone port. The M backbone nodes form a ring network by using the first backbone ports and the second backbone ports. M is an integer greater than 2. The M backbone nodes include a first backbone node. The first backbone port of the first backbone node is in a forwarding state, and the second backbone port of the first backbone node is in a blocked state. Both the first backbone port and the second backbone port of any backbone node other than the first backbone node in the M backbone nodes are in a forwarding state. A second backbone node is one of the M backbone nodes except the first backbone node.

The first backbone node is configured to: obtain link fault information of the ring network; and switch the second backbone port of the first backbone node to a forwarding state based on the link fault information.

Optionally, the second backbone node is configured to: determine that a first link is faulty, where the first link is a link on which a first backbone port of the second backbone node is located; and send a notification packet through a second backbone port of the second backbone node. The notification packet is used to indicate that the first link is faulty.

The first backbone node is specifically configured to receive the notification packet through the first backbone port of the first backbone node.

Optionally, the second backbone node is further configured to switch the first backbone port of the second backbone node to a blocked state.

Optionally, the first backbone port of the second backbone node is a master port, and the second backbone port of the second backbone node is a slave port.

Optionally, the second backbone node is specifically configured to determine, through differential signal diagnosis, that the first link is faulty.

Optionally, the notification packet is a bridge protocol data unit BPDU packet.

Optionally, the first backbone node is specifically configured to determine that a second link is faulty. The second link is a link on which the first backbone port of the first backbone node is located.

Optionally, the first backbone node is further configured to switch the first backbone port of the first backbone node to a blocked state.

Optionally, the first backbone node is specifically configured to determine, through differential signal diagnosis, that the second link is faulty.

Optionally, each of the M backbone nodes includes a first identifier. The first identifier is used to identify a backbone node in the Ethernet system.

Optionally, the Ethernet system further includes a terminal node. The terminal node includes a first terminal port and a second terminal port. The first terminal port is in a forwarding state. The second terminal port is in a blocked state. At least two backbone nodes in the M backbone nodes each further include a third terminal port. The first terminal port and the second terminal port are connected to the third terminal ports of the at least two backbone nodes.

The terminal node is configured to: determine that a third link is faulty, where the third link is a link on which the first terminal port is located; and switch the second terminal port to a forwarding state.

Optionally, the terminal node is further configured to switch the first terminal port to a blocked state.

Optionally, the terminal node is specifically configured to determine, through differential signal diagnosis, that the third link is faulty.

Optionally, the terminal node includes a second identifier. The second identifier is used to identify a terminal node in the Ethernet system.

Optionally, the first backbone node is further configured to: detect the first identifier; and determine, based on the first identifier, that the first backbone node is a backbone node in the network.

Optionally, the second backbone node is further configured to: detect the first identifier; and determine, based on the first identifier, that the second backbone node is a backbone node in the network.

An embodiment of this application further provides a vehicle, including any one of the foregoing Ethernet systems provided in embodiments of this application.

It should be noted that the vehicle may be an intelligent vehicle, a new energy vehicle, a conventional vehicle, or the like. This is not limited in this application. The new energy vehicle includes a pure electric vehicle, an extended-range electric vehicle, a hybrid electric vehicle, a fuel cell vehicle, another new energy vehicle, or the like. Traditional vehicles include gasoline vehicles and crude oil vehicles.

For example, the foregoing Ethernet system is used for a vehicle, the backbone node may be a VIU, and the terminal node may be a domain controller DC, for example, a CDC or a VDC.

Optionally, in this application, both the terminal node and the backbone node may be a switching chip (Line switch, LSW), and have a same hardware structure. The terminal node and the backbone node are distinguished by using the first identifier and the second identifier, so that the nodes can execute different switching logic based on different identifiers, to reduce complexity of configuring the switching chip.

It should be understood that, in this application, each backbone node or terminal node may have one or more other ports, for example, a non-backbone port or a non-terminal port. These ports may be connected to other devices, for example, a micro processor unit (micro processor unit, MPU), a micro control unit (micro control unit, MCU), an input/output interface (input/output interface, I/O interface), and the like. This is not limited in this application.

It should be further understood that, FIG. 1 is merely a schematic diagram of an application scenario of this application, and the application scenario of this application is not limited thereto. For example, the solutions of this application may also be used in a conventional Ethernet. The backbone node may be a router or a switch, and the terminal node may also be a router or a switch.

In addition, in embodiments of this application, the terms such as "for example" and "such as" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

In embodiments of this application, "corresponding (corresponding, relevant)" and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

In this application, "at least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

It should be understood that "first", "second", and various sequence numbers in embodiments of this application are merely used for differentiation for ease of description, for example, distinguishing between bandwidths under different conditions, but are not intended to limit the scope of embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network establishing method, wherein
a network comprises M backbone nodes, each of the M backbone nodes comprises a first backbone port and a second backbone port, the M backbone nodes form a ring network by using the first backbone ports and the second backbone ports, M is an integer greater than 2, the M backbone nodes comprise a first backbone node, the first backbone port of the first backbone node is in a forwarding state, the second backbone port of the first backbone node is in a blocked state, both the first backbone port and the second backbone port of any backbone node other than the first backbone node in the M backbone nodes are in a forwarding state, and a second backbone node is one of the M backbone nodes except the first backbone node; and
the method comprises:
obtaining, by the first backbone node, link fault information of the ring network; and
switching, by the first backbone node, the second backbone port of the first backbone node to a forwarding state based on the link fault information.

2. The method according to claim 1, wherein the obtaining, by the first backbone node, link fault information of the ring network comprises:
receiving, by the first backbone node, a notification packet through the first backbone port of the first backbone node, wherein the notification packet is used to indicate that a first link is faulty, and the first link is a link on which the first backbone port of the second backbone node is located.

3. The method according to claim 2, wherein the notification packet is a bridge protocol data unit BPDU packet.

4. The method according to claim 1, wherein the obtaining, by the first backbone node, link fault information of the ring network comprises:
determining, by the first backbone node, that a second link is faulty, wherein the second link is a link on which the first backbone port of the first backbone node is located.

5. The method according to claim 4, wherein the method further comprises:
switching, by the first backbone node, the first backbone port of the first backbone node to a blocked state.

6. The method according to claim 4 or 5, wherein the determining, by the first backbone node, that a second link is faulty comprises:
determining, by the first backbone node through differential signal diagnosis, that the second link is faulty.

7. The method according to any one of claims 1 to 6, wherein each of the M backbone nodes comprises a first identifier; and the first identifier is used to identify a backbone node in the network.

8. The method according to claim 7, wherein the method further comprises:
detecting, by the first backbone node, the first identifier; and
determining, by the first backbone node based on the first identifier, that the first backbone node is a backbone node in the network.

9. A network establishing method, wherein a network comprises M backbone nodes, each of the M backbone nodes comprises a first backbone port and a second backbone port, the M backbone nodes form a ring network by using the first backbone ports and the second backbone ports, M is an integer greater than 2, the M backbone nodes comprise a first backbone node, the first backbone port of the first backbone node is in a forwarding state, the second backbone port of the first backbone node is in a blocked state, both the first backbone port and the second backbone port of any backbone node other than the first backbone node in the M backbone nodes are in a forwarding state, and a second backbone node is one of the M backbone nodes except the first backbone node; and
the method comprises:
determining, by the second backbone node, that a first link is faulty, wherein the first link is a link on which a first backbone port of the second backbone node is located; and
sending, by the second backbone node, a notification packet through a second backbone port of the second backbone node, wherein the notification packet is used to indicate that the first link is faulty.

10. The method according to claim 9, wherein the method further comprises:
switching, by the second backbone node, the first backbone port of the second backbone node to a blocked state.

11. The method according to claim 10, wherein the first backbone port of the second backbone node is a master port, and the second backbone port of the second backbone node is a slave port.

12. The method according to any one of claims 9 to 11, wherein the determining, by the second backbone node, that a first link is faulty comprises:
determining, by the second backbone node through differential signal diagnosis, that the first link is faulty.

13. The method according to any one of claims 9 to 12, wherein each of the M backbone nodes comprises a first identifier; and the first identifier is used to identify a backbone node in the network.

14. The method according to claim 13, wherein the method further comprises:
detecting, by the second backbone node, the first identifier; and
determining, by the second backbone node based on the first identifier, that the second backbone node is a backbone node in the network.

15. The method according to any one of claims 9 to 14, wherein the notification packet is a bridge protocol data unit BPDU packet.

16. A network establishing method, wherein
a network comprises M backbone nodes, each of the M backbone nodes comprises a first backbone port and a second backbone port, the M backbone nodes form a ring network by using the first backbone ports and the second backbone ports, M is an integer greater than 2, the M backbone nodes comprise a first backbone node, the first backbone port of the first backbone node is in a forwarding state, the second backbone port of the first backbone node is in a blocked state, and both the first backbone port and the second backbone port of any backbone node other than the first backbone node in the M backbone nodes are in a forwarding state, the network further comprises a terminal node, the terminal node comprises a first terminal port and a second terminal port, the first terminal port is in a forwarding state, the second terminal port is in a blocked state, at least two backbone nodes in the M backbone nodes each further comprise a third terminal port, and the first terminal port and the second terminal port are connected to the third terminal ports of the at least two backbone nodes; and
the method comprises:
determining, by the terminal node, that a third link is faulty, wherein the third link is a link on which the first terminal port is located; and
switching, by the terminal node, the second terminal port to a forwarding state.

17. The method according to claim 16, wherein the method further comprises:
switching, by the terminal node, the first terminal port to a blocked state.

18. The method according to claim 16 or 17, wherein the determining, by the terminal node, that a third link is faulty comprises:
determining, by the terminal node through differential signal diagnosis, that the third link is faulty.

19. The method according to any one of claims 16 to 18, wherein the terminal node comprises a second identifier; and the second identifier is used to identify a terminal node in the network.

20. The method according to claim 19, wherein the method further comprises:
detecting, by the terminal node, the second identifier; and
determining, by the terminal node based on the second identifier, that the terminal node is a terminal node in the network.

21. A network establishing apparatus, comprising modules configured to perform the steps of the method according to any one of claims 1 to 8, any one of claims 9 to 15, or any one of claims 16 to 20.

22. A network establishing apparatus, comprising at least one processor, wherein the at least one processor is coupled to at least one memory, and the at least one processor is configured to execute a computer program or instructions stored in the at least one memory, so that the apparatus performs the method according to any one of claims 1 to 8, any one of claims 9 to 15, or any one of claims 16 to 20.

23. A chip system, comprising a processor, configured to invoke a computer program from a memory and run the computer program, so that a communication device on which the chip system is installed performs the method according to any one of claims 1 to 8, any one of claims 9 to 15, or any one of claims 16 to 20.

24. A computer-readable storage medium, wherein the computer-readable storage medium stores a computer program, and the computer program is configured to perform the method according to any one of claims 1 to 8, the method according to any one of claims 9 to 15, or the method according to any one of claims 16 to 20.

25. An Ethernet system, comprising M backbone nodes, wherein each of the M backbone nodes comprises a first backbone port and a second backbone port, the M backbone nodes form a ring network by using the first backbone ports and the second backbone ports, M is an integer greater than 2, the M backbone nodes comprise a first backbone node, the first backbone port of the first backbone node is in a forwarding state, the second backbone port of the first backbone node is in a blocked state, both the first backbone port and the second backbone port of any backbone node other than the first backbone node in the M backbone nodes are in a forwarding state, and a second backbone node is one of the M backbone nodes except the first backbone node; and
the first backbone port is configured to:
obtain link fault information of the ring network; and
switch the second backbone port of the first backbone node to a forwarding state based on the link fault information.

26. The Ethernet system according to claim 25, wherein
the second backbone port is configured to:
determine that a first link is faulty, wherein the first link is a link on which a first backbone port of the second backbone node is located; and
send a notification packet through a second backbone port of the second backbone node, wherein the notification packet is used to indicate that the first link is faulty; and
the first backbone port is specifically configured to:
receive the notification packet through the first backbone port of the first backbone node.

27. The Ethernet system according to claim 26, wherein the second backbone node is further configured to:
switch the first backbone port of the second backbone node to a blocked state.

28. The Ethernet system according to claim 27, wherein the first backbone port of the second backbone node is a master port, and the second backbone port of the second backbone node is a slave port.

29. The Ethernet system according to any one of claims 26 to 28, wherein the second backbone node is specifically configured to:
determine, through differential signal diagnosis, that the first link is faulty.

30. The Ethernet system according to any one of claims 26 to 29, wherein the notification packet is a bridge protocol data unit BPDU packet.

31. The Ethernet system according to claim 25, wherein the first backbone node is specifically configured to:
determine that a second link is faulty, wherein the second link is a link on which the first backbone port of the first backbone node is located.

32. The Ethernet system according to claim 31, wherein the first backbone node is further configured to:
switch the first backbone port of the first backbone node to a blocked state.

33. The Ethernet system according to claim 31 or 32, wherein the first backbone node is specifically configured to:
determine, through differential signal diagnosis, that the second link is faulty.

34. The Ethernet system according to any one of claims 25 to 33, wherein each of the M backbone nodes comprises a first identifier; and the first identifier is used to identify a backbone node in the Ethernet system.

35. The Ethernet system according to any one of claims 25 to 34, wherein the Ethernet system further comprises a terminal node;
the terminal node comprises a first terminal port and a second terminal port, the first terminal port is in a forwarding state, the second terminal port is in a blocked state; and
at least two backbone nodes in the M backbone nodes each further comprise a third terminal port, the first terminal port and the second terminal port are connected to the third terminal ports of the at least two backbone nodes, wherein
the terminal node is configured to:
determine that a third link is faulty, wherein the third link is a link on which the first terminal port is located; and
switch the second terminal port to a forwarding state.

36. The Ethernet system according to claim 35, wherein the terminal node is further configured to:
switch the first terminal port to a blocked state.

37. The Ethernet system according to claim 35 or 36, wherein the terminal node is specifically configured to:
determine, through differential signal diagnosis, that the third link is faulty.

38. The Ethernet system according to any one of claims 35 to 37, wherein the terminal node comprises a second identifier; and the second identifier is used to identify a terminal node in the Ethernet system.

39. A vehicle, comprising the Ethernet system according to any one of claims 25 to 38.
